Europäisches Patentamt

(19) **European Patent Office**

**Office européen des brevets**

(11) Veröffentlichungsnummer: **0 076 791**
**B1**

(12) EUROPÄISCHE PATENTSCHRIFT

(45) Veröffentlichungstag der Patentschrift:
**31.07.85**

(51) Int. Cl.⁴: **B 60 G 17/00**

(21) Anmeldenummer: **82890137.1**

(22) Anmeldetag: **27.09.82**

(54) Einrichtung zum Blockieren der Pendelbewegung einer Pendelachse eines Radfahrzeuges.

(30) Priorität: **28.09.81 AT 4158/81**

(43) Veröffentlichungstag der Anmeldung:
**13.04.83 Patentblatt 83/15**

(45) Bekanntmachung des Hinweises auf die Patenterteilung:
**31.07.85 Patentblatt 85/31**

(84) Benannte Vertragsstaaten:
**BE DE FR GB IT SE**

(56) Entgegenhaltungen:
**DE - A - 2 852 600**
**GB - A - 1 272 056**
**US - A - 4 264 014**
**"Soviet Inventions Illustrated", Week B 31, 17**
**September 1979 Section Q 12**

(73) Patentinhaber: **VOEST-ALPINE Aktiengesellschaft,**
**Friedrichstrasse 4, A-1011 Wien (AT)**

(72) Erfinder: **Gradenegger Helmut, Dipl. Ing., Hangweg 50,**
**A-8740 Zeltweg (AT)**
Erfinder: **Ott, Karl-Heinz, Sandgasse 8,**
**A-8720 Knittelfeld (AT)**

(74) Vertreter: **Kretschmer, Adolf, Dipl.-Ing. et al,**
**Patentanwälte Dipl.Ing. A. Kretschmer Dr. Thomas M.**
**Haffner Schottengasse 3a, A-1014 Wien (AT)**

## Beschreibung

Die Erfindung bezieht sich auf eine Einrichtung zum Blockieren der Pendelbewegung einer Pendelachse eines Radfahrzeuges mit einem einen Ausleger tragenden Schwenkwerk, insbesondere eines Radladers, mit an der Pendelachse angreifenden hydraulischen Zylinder-Kolbenaggregaten, deren Arbeitsräume über zu denselben öffnende Rückschlagventile miteinander und über eine Leitung mit einer hydraulischen Druckmittelquelle in Verbindung setzbar sind, wobei die Rückschlagventile durch eine Druckmittelquelle aufsteuerbar sind, welche durch ein vom Schwenkwerk des Fahrzeuges betätigbares Steuerventil über eine Steuerleitung mit den Rückschlagventilen in Verbindung setzbar ist, und wobei das Steuerventil mit einer relativ zu ihm verdrehbaren Nockenscheibe zusammenwirkt, welche drehfest mit einem Teil des Schwenkwerkes, vorzugsweise mit dem verschwenkbaren Teil desselben, verbunden ist. Die Maßnahme, die Pendelachse bei der Schwenkbewegung des Auslegers eines Radladers zu blockieren, dient der Stabilisierung des Radladers bei verschwenktem Ausleger in Querrichtung und soll die Standsicherheit beim Arbeitseinsatz gewährleisten sowie ein Kippen des Fahrzeuges am Hang verhindern.

Aus der US-A-4 264 014 ist eine derartige Einrichtung bekannt, bei welcher im Betrieb den den Arbeitsräumen der hydraulischen Zylinder-Kolbenaggregate vorgeschalteten Rückschlagventilen ständig Druckflüssigkeit unter konstantem Druck zugeführt ist. Als Druckmittelquelle zum Aufsteuern der Rückschlagventile ist eine gesonderte Druckluftquelle vorgesehen, die über das vom Schwenkwerk betätigbare Steuerventil mit gesonderten Druckluftzylindern verbindbar ist, deren Kolben über Kolbenstangen mit den Verschlußgliedern der Rückschlagventile zusammenwirken. Eine gesonderte Druckmittelquelle zum Aufsteuern der Rückschlagventile hat an sich den Nachteil, daß gesonderte Leitungen zu diesen Rückschlagventilen geführt werden müssen. Wenn, wie dies gemäß der US-A vorgeschlagen ist, eine Druckluftquelle für das Aufsteuern der Rückschlagventile vorgesehen sein muß, bringt dies noch den weiteren Nachteil, daß ein gesonderter Luftkompressor vorgesehen sein muß. Die Erfindung bezieht sich aber insbesondere auf Radlader, bei welchen üblicherweise ein Luftkompressor nicht vorgesehen ist. Die Anordnung gemäß der US-A erfordert daher einen zusätzlichen Aufwand.

Die Erfindung stellt sich zur Aufgabe, diesen Nachteil zu vermeiden und den Aufwand für die Steuerung der Blockierung der Pendelachse zu verringern. Die Erfindung besteht hierbei im wesentlichen darin, daß die die hydraulische Druckmittelquelle mit den Arbeitsräumen der hydraulischen Kolben-Zylinderaggregate verbindende Leitung selbst die Steuerleitung bildet, welche über das Steuerventil die Rückschlagventile aufsteuert. Auf diese Weise wird es ermöglicht, einerseits einen zusätzlichen Luftkompressor zu ersparen, und es wird andererseits mit einer Leitung von der Druckmittelquelle zu den Rückschlagventilen der Zylinder-Kolbenaggregate das Auslangen gefunden. Wenn durch das Steuerventil die von der hydraulischen Druckmittelquelle zu den Rückschlagventilen führende hydraulische Leitung freigegeben wird, so werden durch den Druck die Rückschlagventile aufgesteuert, wobei die Verbindung zwischen den Arbeitsräumen der beiden hydraulischen Zylinder-Kolbenaggregate über die aufgesteuerten Rückschlagventile freigegeben wird, so daß die Pendelachse pendeln kann. Gleichzeitig werden aber über dieselbe Leitung, welche vom Steuerventil freigegeben ist, die Arbeitsräume der beiden Zylinder-Kolbenaggregate mit der hydraulischen Druckmittelquelle verbunden, so daß Leckverluste ausgeglichen werden. Die Leitung zwischen der hydraulischen Druckmittelquelle und den Rückschlagventilen wirkt somit gleichzeitig als Steuerleitung für das Aufsteuern der Rückschlagventile und auch als Nachfülleitung für den Ausgleich von Leckverlusten.

Bei den bisher bekannten Einrichtungen mußte in relativ kurzen Zeitabständen eine vollständige Entlüftung der Hydraulikleitungen durchgeführt werden, um die Betriebssicherheit zu gewährleisten. Die Gefahr, daß Lufteinschlüsse in das hydraulische System gelangen, ist bei der erfindungsgemäßen Anordnung dadurch erhöht, daß die hydraulische Leitung durch das Steuerventil abwechselnd mit der hydraulischen Druckmittelquelle und mit dem Rücklauf verbunden wird. Gemäß einer bevorzugten Ausführungsform der Erfindung ist daher die Steuerleitung oberhalb der Verbindungsleitung zwischen den Zylinder-Kolbenaggregaten angeordnet. Wenn nun das Steuerventil die Leitung von der hydraulischen Druckmittelquelle zu den Rückschlagventilen freigibt, so bleibt diese Verbindungsleitung mit dem hydraulischen Medium gefüllt. Wenn das Steuerventil diese Verbindungsleitung mit dem Rücklauf verbindet, so wird dadurch, daß die Steuerleitung oberhalb der Verbindungsleitung angeschlossen ist, automatisch eine Entlüftung erreicht. Es wird daher die bisher in Zeitabständen erforderliche vollständige Entlüftung der Hydraulikleitungen erspart und es werden die Leckverluste ständig aus dem Steuerkreislauf nachgefüllt.

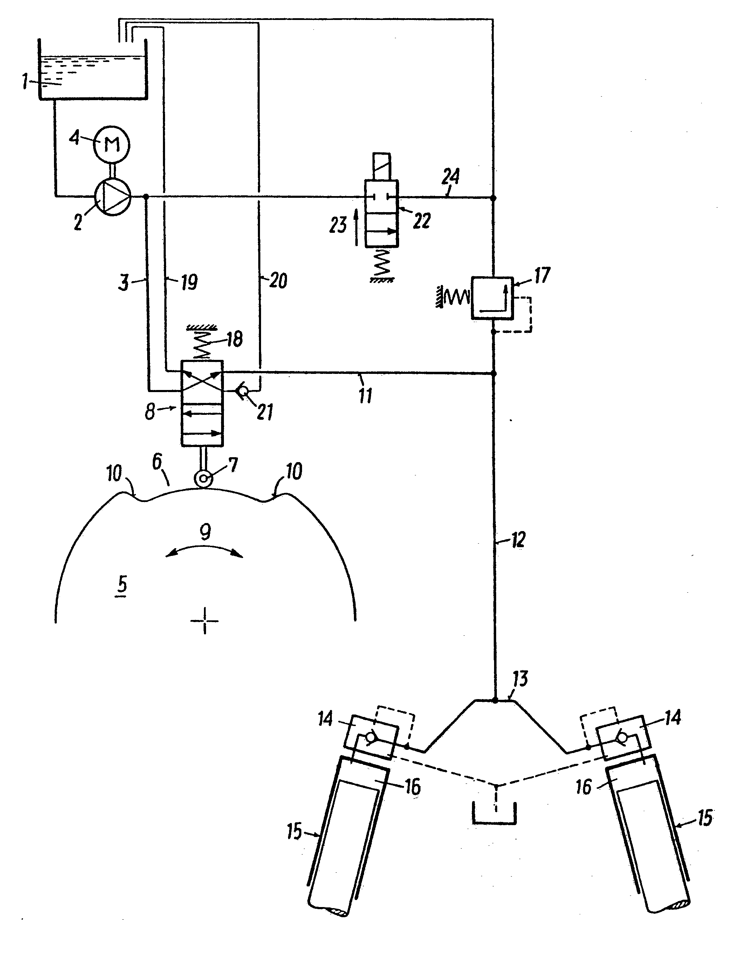

Die Erfindung wird nachfolgend an Hand eines in der Zeichnung schematisch dargestellten Ausführungsbeispieles näher erläutert.

Aus dem Tank 1 wird über eine Pumpe 2 Hydraulikflüssigkeit in die Leitung 3 gepumpt. Die Pumpe 2 wird von einem Motor 4 angetrieben.

Das Schwenkwerk weist eine mit dem nicht dargestellten Ladearm bzw. Ausleger drehfest verbundene Nockenscheibe 5 auf, welche in der Geradeausstellung des Ladearmes eine relativ zur Achse des Ladearmes symmetrische Ausnehmung 6 an ihrem Umfang aufweist, welche durch zwei Nocken 10 begrenzt ist. In diese Ausnehmung 6 taucht ein Rollenstößel 7 eines Steuerventils 8. Bei Verschwenken des Ladearmes und damit der Nockenscheibe 5 im Sinne des Doppelpfeiles 9 gelangt der Rollenstößel 7 an die die Ausnehmung 6 begrenzenden Nocken 10 und das Steuerventil 8 wird über einen kleinen Schwenkwinkelbereich in die zweite Schaltstellung geschoben. In der Geradeausstellung des Schwenkwerkes bzw. des Ladearmes steht die Leitung 3 mit einer Steuerleitung 11 in Verbindung, welche über eine Verbindungsleitung 12 an eine Verbindungsleitung 13 zwischen den hydraulisch entsperrbaren Rückschlagventilen 14 der beiden hydraulischen Zylinder-Kolbenaggregate 15 angeschlossen ist. Die hydraulischen Zylinder-Kolbenaggregate 15 blockieren die Pendelbewegung der Pendelachse, solange die Rückschlagventile 14 geschlossen sind. Bei Auftreten eines Druckes in der Steuerleitung 11 und Verbindungsleitung 13, welcher größer ist als der Öffnungsdruck der hydraulisch entsperrbaren Rückschlagventile 14, stehen die Arbeitsräume 16 der beiden Zylinder-Kolbenaggregate 15 über die Verbindungsleitung 13 miteinander in Verbindung, so daß die Pendelbewegung ermöglicht wird. Nahe der Verbindungsleitung 13 und damit nahe den Rückschlagventilen 14 ist ein Druckhalteventil 17 angeordnet, über welches der Druck in der Steuerleitung auf einem vorbestimmten Wert gehalten wird. Der Vorspanndruck des Druckhalteventiles 17 ist hiebei höher als die Durchflußwiderstände der miteinander kommunizierenden Arbeitsräume 16 der hydraulischen Zylinder-Kolbenaggregate 15, so daß diese Arbeitsräume mit Hydraulikflüssigkeit gefüllt gehalten werden. Wenn der Ansprechdruck des Druckhalteventils überschritten wird, kann das überschüssige Druckmittel wiederum in den Tank 1 abfließen.

Bei der in der Zeichnung dargestellten Stellung des Steuerventil 8 tritt somit keine Blockade der Pendelbewegung der Pendelachse auf. Wird nun der Ausleger verschwenkt, so wird der Drehstuhl und damit die Nockenscheibe 5 im Sinne des Doppelpfeiles 9 mitgenommen und das Steuerventil 8 wird durch den Rollenstößel 7 entgegen der Kraft einer Feder 18 in seine zweite Position geschoben, bei welcher die Steuerleitung 11 über eine Leitung 19 in den Tank 1 mündet und die Druckmittelleitung 3 über eine Leitung 20 gleichfalls mit dem Tank 1 verbunden ist. Es wird somit die Steuerleitung 11 drucklos, wodurch die hydraulisch entsperrbaren Rückschlagventile 14 schließen. Die Verbindung zwischen den Arbeitsräumen 16 der beiden hydraulischen Zylinder-Kolbenaggregate 15 wird auf diese Weise unterbrochen, so daß die hydraulischen Zylinder-Kolbenaggregate 15 durch die in den Arbeitsräumen 16 eingeschlossenen Ölvolumina blockiert sind und die Pendelachse blockiert wird. Zwischen den Verbindungsleitungen 19 und 20 ist ein Rückschlagventil 21 vorgesehen, da die Leitung 19, über welche der Druck in der Steuerleitung 11 abgebaut wird, ohne Zwischenschaltung eines Filters in den Tankraum mündet.

Der Steuerkreislauf, das heißt, insbesondere die Steuerleitung 11, die Anschlußleitung 12 sowie das Druckhalteventil 17 und gegebenenfalls das Steuerventil 8, sind räumlich oberhalb der Verbindungsleitung 13 angeordnet, um eine konstante Entlüftung der Verbindungsleitung 13 sicherzustellen.

Neben der durch die Nockenscheibe 5 bei Verschwenken des Ladearmes bewirkten automatischen Steuerung der Blockade kann über ein Magnetventil 22 jederzeit willkürlich eine Blockade erreicht werden. Bei Betätigung des entsprechenden Schalters wird das Magnetventil 22 im Sinne des Pfeiles 23 verschoben, so daß die Druckmittelleitung 3 unmittelbar über eine Leitung 24 mit dem Tank 1 in Verbindung gesetzt wird. Es kann sich somit in der Steuerleitung 11 kein Druck aufbauen und die Rückschlagventile 14 können nicht hydraulisch entsperrt werden, wodurch die Blockade eintritt.

Eine Entlüftung der Steuerleitung 11 kann in einfacher Weise an der Anschlußstelle an die Verbindungsleitung 12 oder am Druckhalteventil 17 erfolgen. Ebenso erfolgt eine automatische Entlüftung regelmäßig dann, wenn nach einem Verschwenken der Nockenscheibe 5 die Steuerleitung 11 mit der in den Tank mündenden Leitung 19 in Verbindung gesetzt wird.

Der Arbeitsdruck in der Steuerleitung 11 wird mit dem Druckhalteventil 17 mit etwa 20 bar vorgespannt. Der Öffnungsdruck der hydraulisch entsperrbaren Rückschlagventile 14 liegt naturgemäß unterhalb dieses Vorspanndruckes und üblicherweise zwischen 8 und 13 bar.

## Patentansprüche

1. Einrichtung zum Blockieren der Pendelbewegung einer Pendelachse eines Radfahrzeuges mit einem einen Ausleger tragenden Schwenkwerk, insbesondere eines Radladers, mit an der Pendelachse angreifenden hydraulischen Zylinder-Kolbenaggregaten (15), deren Arbeitsräume (16) über zu denselben öffnende Rückschlagventile (14) miteinander und über eine Leitung (3, 11, 12) mit einer hydraulischen Druckmittelquelle (2) in Verbindung setzbar sind, wobei die Rückschlagventile (14) durch eine Druckmittelquelle aufsteuerbar sind, welche durch ein vom Schwenkwerk des Fahrzeuges betätigbares Steuerventil (8) über eine Steuerleitung (11, 12) mit den Rückschlagventilen (14) in Verbindung setzbar ist und wobei das Steuerventil (8) mit einer relativ zu ihm verdrehbaren Nockenscheibe (5) zusammenwirkt, welche drehfest mit einem Teil des Schwenkwerkes, vorzugsweise mit dem verschwenkbaren Teil desselben, verbunden ist, dadurch gekennzeichnet, daß die die hydraulische Druckmittelquelle (2) mit den Arbeitsräumen (16) der hydraulischen Kolben-Zylinderaggregate (15) verbindende Leitung (3, 11, 12) selbst die Steuerleitung (11, 12) bildet, welche über das Steuerventil (8) die Rückschlagventile (14) aufsteuert.

2. Einrichtung nach Anspruch 1, dadurch gekennzeichnet, daß die Steuerleitung (11, 12) oberhalb der Verbindungsleitung (13) zwischen den Zylinder-Kolbenaggregaten (15) angeordnet ist.

## Claims

1. Device for blocking the oscillating motion of a pendulum axle of a wheeled vehicle having a swing gear carrying an extension arm, in particular a wheel loader, the pendulum axle being engaged with hydraulic cylinder-piston aggregates (15) the working areas (16) of which are connectable with each other through check valves (14) opening into said working areas (16) and via a line (3, 11, 12) with a hydraulic pressure source (2), wherein the check valves (14) can be controlled to be opened by a pressure source, which can be connected with the check valves (14) via a control-line (11, 12) and through a control valve (8) actuated by the swing gear of the vehicle and wherein the control valve (8) is cooperating with a cam plate (5) pivoting with respect thereto, which is drivingly connected with a part of the swing gear, preferably with the swinging part thereof, characterised in that the line (3, 11, 12) connecting the hydraulic pressure source (2) with the working areas (16) of the hydraulic cylinder-piston aggregates (15) is the control line (11, 12) itself which opens the check valves (14) via the control valve (8).

2. Device as claimed in claim 1, characterised in that the control line (11, 12) is arranged above the connecting line (13) between the cylinder-piston aggregates (15).

## Revendications

1. Dispositif pour bloquer le mouvement d'oscillation de l'axe oscillant d'un véhicule à roues comprenant un mécanisme de pivotement qui porte une flèche, en particulier, d'un chargeur à roues comprenant des vérins hydrauliques à cylindre-piston (15) qui attaquent l'axe oscillant, dont les chambres de travail (16) peuvent être mises en communication entre elles par l'intermédiaire de clapets anti-retour (14) qui s'ouvrent vers ses chambres et peuvent être mises en communication avec une source de fluide sous pression hydraulique (2) par l'intermédiaire d'une conduite (3, 11, 12), les clapets anti-retour (14) pouvant être commandés en ouverture par une source de fluide sous pression qui peut être mise en communication avec les clapets anti-retour (14) par l'intermédiaire d'une conduite de commande (11, 12), par un distributeur (8) pouvant être commandé par le mécanisme de pivotement du véhicule, et le distributeur (8) coopérant avec une came (5) qu'on peut faire tourner par rapport à ce dernier, et qui est reliée solidairement en rotation à une partie du mécanisme de pivotement, de préférence à la partie pivotante de ce dernier, caractérisé en ce que la conduite (3, 11, 12) reliant la source de fluide sous pression hydraulique (2) aux chambres de travail (16) des vérins hydrauliques à cylindre-piston (15), forme elle-même la conduite de commande (11, 12) qui commande les clapets anti-retour (14) en ouverture par l'intermédiaire du distributeur (8).

2. Dispositif selon la revendication 1, caractérisé en ce que la conduite de commande (11, 12) est disposée au-dessus de la conduite de liaison (13) prévue entre les vérins à cylindre-piston (15).